(19) **Europäisches Patentamt / European Patent Office / Office européen des brevets**

(11) **EP 4 109 293 A1**

(12) # EUROPEAN PATENT APPLICATION

(43) Date of publication:
**28.12.2022  Bulletin 2022/52**

(21) Application number: **22187749.1**

(22) Date of filing: **29.07.2022**

(51) International Patent Classification (IPC):
*G06F 16/25* (2019.01)

(52) Cooperative Patent Classification (CPC):
**G06F 16/254**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **04.08.2021  CN 202110892030**

(71) Applicant: **BEIJING BAIDU NETCOM SCIENCE TECHNOLOGY CO., LTD.**
**Beijing 100085 (CN)**

(72) Inventors:
- WANG, Gang
  **Beijing, 100085 (CN)**
- LIU, Wei
  **Beijing, 100085 (CN)**
- ZHANG, Qian
  **Beijing, 100085 (CN)**
- CHEN, Guoliang
  **Beijing, 100085 (CN)**

(74) Representative: **Bittner, Bernhard et al**
**Hannke Bittner & Partner**
**Patent- und Rechtsanwälte mbB**
**Prüfeninger Strasse 1**
**93049 Regensburg (DE)**

(54) **DATA QUERY METHOD AND APPARATUS, ELECTRONIC DEVICE, STORAGE MEDIUM, AND PROGRAM PRODUCT**

(57)    The present disclosure provides a data query method and apparatus, an electronic device, a storage medium, and a program product, which relate to the field of computer technologies, and in particular to the field of intelligent search. The specific implementation includes: determining an extraction location of target data according to a data query request; determining a data extraction strategy corresponding to the extraction location; and extracting the target data at the extraction location according to the data extraction strategy, and using the target data as a data query result. The above solution solves the technical problems of excessive system overhead and poor real-time performance in the existing deep paging mechanism.

```
┌──────────────────────────────────────────────────────┐ ╴S101
│ determining an extraction location of target data     │
│ according to a data query request                     │
└──────────────────────────────────────────────────────┘
                          │
                          ▼
┌──────────────────────────────────────────────────────┐ ╴S102
│ determining a data extraction strategy corresponding  │
│ to the extraction location                            │
└──────────────────────────────────────────────────────┘
                          │
                          ▼
┌──────────────────────────────────────────────────────┐ ╴S103
│ extracting the target data at the extraction location │
│ according to the data extraction strategy, and using  │
│ the target data as a data query result                │
└──────────────────────────────────────────────────────┘
```

**FIG. 1**

EP 4 109 293 A1

**Description**

**TECHNICAL** FIELD

The present disclosure relates to the field of computer technologies, and in particular to the field of intelligent search.

BACKGROUND

In a specific data query scenario, a user needs to view data results of any page in real time by turning pages, and the entire process requires an online real-time response from a back-end query system. In a case of a relatively large scale of data, the existing technology has the problems of high system overhead, poor real-time performance and inability to support page-hopping query, resulting in the poor user experience.

**SUMMARY**

The present disclosure provides a data query method and apparatus, an electronic device, and a storage medium.
According to an aspect of the present disclosure, there is provided a data query method. The method may include operations of:

determining an extraction location of target data according to a data query request;
determining a data extraction strategy corresponding to the extraction location; and
extracting the target data at the extraction location according to the data extraction strategy, and using the target data as a data query result.

According to another aspect of the present disclosure, there is provided a data query apparatus. The apparatus may include:

an extraction location determination module, configured for determining an extraction location of target data according to a data query request;
an extraction strategy determination module, configured for determining a data extraction strategy corresponding to the extraction location; and
a result determination module, configured for extracting the target data at the extraction location according to the data extraction strategy, and using the target data as a data query result.

According to another aspect of the present disclosure, there is provided an electronic device, including:

at least one processor; and
a memory communicatively connected with the at least one processor, wherein
the memory stores instructions executable by the at least one processor, and the instructions, when executed by the at least one processor, enable the at least one processor to perform the method in any one of the embodiments of the present disclosure.

According to another aspect of the present disclosure, there is provided a non-transitory computer-readable storage medium storing computer instructions, wherein the computer instructions, when executed by a computer, cause the computer to perform the method in any one of the embodiments of the present disclosure.
According to another aspect of the present disclosure, there is provided a computer program product including a computer program, wherein the computer program, when executed by a processor, implements the method in any one of the embodiments of the present disclosure.
The technology according to the present disclosure solves the technical problems of excessive system overhead and poor real-time performance in the existing deep paging mechanism, thereby improving the efficiency of data query.
It should be understood that the content described in this section is neither intended to identify the key or important features of the embodiments of the present disclosure, nor intended to limit the scope of the present disclosure. Other features of the present disclosure will be readily understood through the following description.

**BRIEF DESCRIPTION OF THE DRAWINGS**

The drawings are used to better understand the solution and do not constitute a limitation to the present disclosure. In which:

FIG. 1 is a flowchart of a data query method according to the present disclosure;
FIG. 2 is a first flowchart of determining an extraction location according to the present disclosure;
FIG. 3 is a first flowchart of determining an extraction strategy according to the present disclosure;
FIG. 4 is a second flowchart of determining an extraction location according to the present disclosure;
FIG. 5 is a second flowchart of determining an extraction strategy according to the present disclosure;
FIG. 6 is a flowchart of determining a first candidate data set according to the present disclosure;
FIG. 7 is a flowchart of determining an extraction starting point according to the present disclosure;
FIG. 8 is a flowchart of determining target data according to the present disclosure;
FIG. 9 is a logic flowchart of deep paging according to the present disclosure;
FIG. 10 is a schematic diagram of a data query apparatus according to the present disclosure; and
FIG. 11 is a block diagram of an electronic device configured to implement the data query method of an embodiment of the present disclosure.

**DETAILED DESCRIPTION**

Exemplary embodiments of the present disclosure are described below in combination with the drawings, including various details of the embodiments of the present disclosure to facilitate understanding, which should be considered as exemplary only. Thus, those of ordinary skill in the art should realize that various changes and modifications may be made to the embodiments described here without departing from the scope and spirit of the present disclosure. Likewise, descriptions of well-known functions and structures are omitted in the following description for clarity and conciseness.

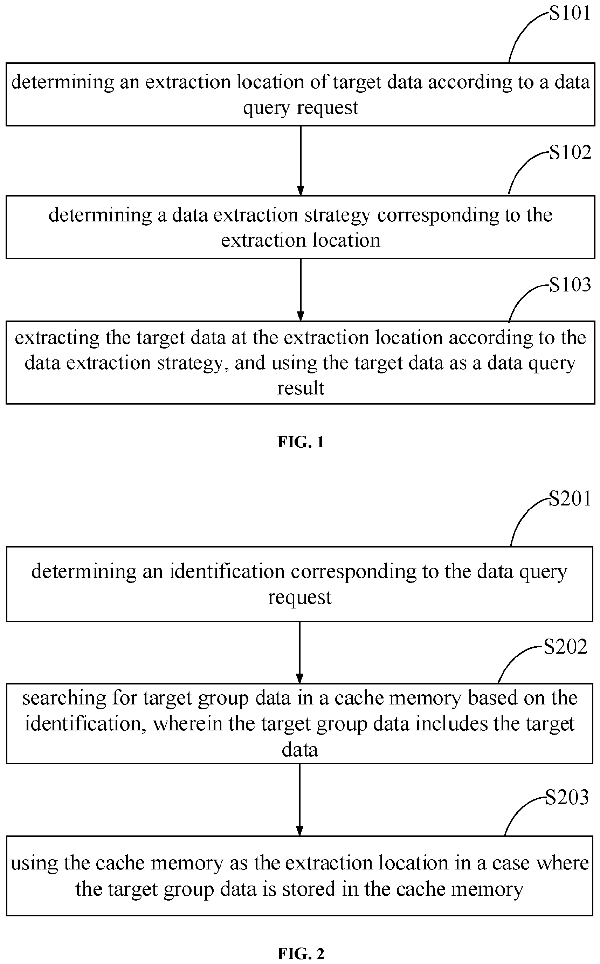

As shown in FIG. 1, the present disclosure relates to a data query method, which may include:

S101: determining an extraction location of target data according to a data query request;

S102: determining a data extraction strategy corresponding to the extraction location; and

S103: extracting the target data at the extraction location according to the data extraction strategy, and using the target data as a data query result.

This embodiment may be applied to a server, and the server may be an electronic device with a data query function, such as a tablet computer, a smart phone, and the like.

When a user queries data on a client, the server receives a data query request sent by the client, wherein the query request may include a requirement for data to be queried by the client, for example, the query request may include keywords about query results, sorting fields for sorting query results, paging parameters for query data, etc. Any data query request may be used in the present disclosure, which is not limited here.

When the user initiates a data query request on the client by specifying keywords and sorting fields, the corresponding query results can be viewed in real time in a certain order by turning pages, i.e., starting from the first page of results corresponding to the query request, and continuing to turn pages and browse. When the request result is larger than a certain number of pages, for example, when the page number corresponding to the data query request exceeds a certain number (for example, 1000 pages or more), a deep paging problem may occur.

Based on the data query request sent by the client, the server returns target data meeting the data query request to the client. The target data may be data on a target result page, including a plurality of pieces of stored data that meet the data query request. Specifically, the following operations are included:

First, determining an extraction location of the target data. In a case where the target data is stored in a cache memory, the cache memory may be used as the extraction location of the target data; otherwise, a main memory may be used as the extraction location of the target data.

Then, determining a data extraction strategy corresponding to the extraction location. When the cache memory is used as the extraction location of the target data, the target data is quickly read based on identification information and used as the corresponding data extraction strategy. When the main memory is used as the extraction location of the target data, identification information is generated based on the data query request, and then the target data is extracted based on the identification information.

Finally, according to the data extraction strategy, extracting the target data at the extraction location, and using the target data as a data query result.

Through the above process, based on the data query request, the corresponding data extraction location and extraction strategy are determined, so that different extraction strategies can be adopted in different extraction locations to query the target data, thereby solving the technical problems of excessive system overhead and poor real-time performance in the existing deep paging mechanism.

As shown in FIG. 2, in an implementation, S101 may include the following sub-operations:

S201: determining an identification corresponding to the data query request;

S202: searching for target group data in a cache memory based on the identification, wherein the target group data includes the target data; and

S203: using the cache memory as the extraction location in a case where the target group data is stored in the cache memory.

The identification corresponding to the query request may be a character string uniquely corresponding to the query request sent by the client. For example, the identification corresponding to the query request may be a session identification (Session ID) used in the cache memory.

Herein, Session refers to a session retention mechanism used when accessing a stateless service. When the user accesses the server for the first time, the server will generate a unique Session ID for the user and return it to the user. At the same time, the server will cache Session data corresponding to the Session ID in the cache memory and set the expiration time of the Session data. When the user accesses the server again, the server will look up the cache records based on the Session ID carried by the user, and quickly respond to the data query request.

In an implementation, the determining the identification corresponding to the query request may include: first, calculating the sequence number of a target group corresponding to the target data based on the query request; then, determining the corresponding identification based on the query request and the sequence number of the target group.

The data query request may include query keywords, sorting fields, page number information, page size information, data capacity information of a page group, and the like.

Herein, the sorting fields may be "time," "price," etc., which will not be exhaustive here.

The page number information may be the sequence number information corresponding to the target page that the user wishes to retrieve, and the value thereof may be 1, 2, 3, ..., n (positive integer), which is not limited here.

The page size information, i.e., the number of pieces of stored data corresponding to each page, generally takes 10, and may also be set as required, which is not limited here.

The data capacity of the page group refers to the number of corresponding stored data results in a group. For example, pages 1 to 100 are taken as a page group, each page contains 10 pieces of stored data, then the data capacity corresponding to the page group is 1000 pieces. The data capacity of the page group may also be 5000 pieces, 10000 pieces, etc., which is not limited here.

The target group is unit access data containing the target data, and the sequence number of the target group may be used to identify the result set corresponding to a plurality of consecutive pages containing the target data. For example, the sequence number of the page group composed of pages 1 to 100 is 1, and the sequence number of the page group composed of pages 101 to 200 is 2. Correspondingly, the sequence number of the target group corresponding to the stored data on page 81 is 1, the sequence number of the target group corresponding to page 151 is 2, and the sequence numbers of the target groups corresponding to other page number information are not exhaustive.

In an implementation, based on the query request, the sequence number of the target group corresponding to the target data is calculated using the round-up function, and the calculation process is shown in the calculation formula (1):

$$\text{page\_group\_index} = \text{CEIL}((\text{page\_size} * \text{page\_index})/(1.0 * \text{page\_group\_size}))$$

$$ \text{ —— calculation formula (1).}$$

In the above calculation formula, page_group index may represent the sequence number of the target group, and the value is 1, 2, 3, ..., n; page_size may represent the page size, that is, the number of results per page, and the default value is 10, or it may be customize assignment; page index may represent page number information, and the value thereof is 1, 2, 3, ..., n; and page_group_size may represent the total number of results in the page group.

For example, when page_size=10, page_index=205, and page_group_size=1000, there is page_group_index=CEIL((10*205)/(1.0*1000))=2.

The calculation method of the sequence number of the corresponding target group may also adopt other rounding function forms, such as a round down function, etc., which is not limited here.

After the sequence number of the target group is obtained by calculation, the corresponding identification may be further determined based on the query request and the sequence number of the target group. Specifically, a digital fingerprint with a limited length may be extracted as the corresponding identification based on the parameter information contained in the query request and the sequence number information of the target group. For example, the corresponding identification may be generated according to the following calculation formula (2) based on the hash function (hash), and the specific process is as follows:

$$\text{Session ID}=\text{hash (query} + \text{sorted field} + \text{page\_size} + \text{page\_group\_index} +$$

$$\text{page\_group\_size) --- calculation formula (2)}.$$

In the above calculation formula, query may represent the keyword contained in the data query request, sorted field may represent the sorted field in the data query request, and the corresponding meanings of the other parameters may refer to the corresponding explanation of the above calculation formula (1).

The identification corresponding to the query request may also be determined in other hash function forms, which are not limited here.

After the identification corresponding to the query request is obtained, target group data may be searched for in the cache memory based on the identification, and the target group data contains the target data.

The server looks up the cache record in the cache memory based on the identification, and may quickly respond to this data query request. In a case where the target group data corresponding to the identification has a historical query record within a period of time, and the historical query record is in a valid state, the target group data is stored in the cache memory.

In a case where the target group data is stored in the cache memory, the cache memory is used as the extraction location. The server extracts the target group data corresponding to the query request in the cache memory based on the identification corresponding to the query request. Further, the target data may be extracted from the target group data according to the target page number information contained in the query request.

Through the above process, the server may look up the cache record in the cache memory based on the identification corresponding to the query request, so as to quickly respond to this data query request.

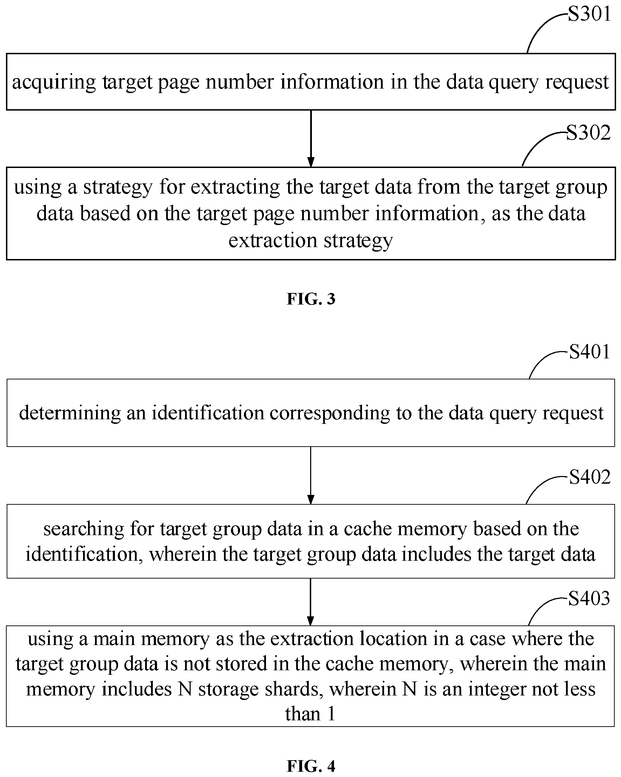

As shown in FIG. 3, in an implementation, in a case where the cache memory is used as the extraction location, S102 may include the following sub-operations:

S301: acquiring target page number information in the data query request; and

S302: using a strategy for extracting the target data from the target group data based on the target page number information, as the data extraction strategy.

For example, in a case where there are the page size (page_size) = 10, the page number information (page_index) = 205, and the total number of results in the page group (page_group_size) = 1000, the corresponding data extraction strategy is that the server quickly read the cache record corresponding to the sequence number (page_group index) = 2 of the target group in the cache memory based on the identification corresponding to the query request; further, the server intercepts 10 pieces of target data corresponding to the target page number information of 205 in the above cache record, based on the page number information (page index) = 205.

At this time, if the client randomly jumps to page 261, that is to say, the page number information (page index) = 261, both the target data at this time and the target data corresponding to the previous query page 205 belong to the target group data corresponding to the sequence number (page_group index) = 2 of the target group together. At this time, the corresponding data extraction strategy is that the server intercepts 10 pieces of target data corresponding to the target page number information of 261 in the above cache record, based on the page number information (page index) = 261.

Through the above process, in a case where the target data to be queried and the historical query data belong to the same page group, the strategy for extracting target data from the target group data based on the target page number information supports random page jump query of the client in the cache memory.

As shown in FIG. 4, in an implementation, S101 may include the following sub-operations:

S401: determining an identification corresponding to the data query request;

S402: searching for target group data in a cache memory based on the identification, wherein the target group data includes the target data; and

S403: using a main memory as the extraction location in a case where the target group data is not stored in the cache memory, wherein the main memory includes N storage shards, wherein N is an integer not less than 1.

Herein, S401 and S402 are the same as the aforementioned operations, and will not be repeated here.

The cache memory not storing target group data mainly includes the following two situations: within a period of time, the target group data corresponding to the identification has no historical query record; or there has been a historical query record corresponding to the identification, but the historical query record has been in an invalid state.

In a case where the cache memory does not store the target group data, the main memory is used as the extraction location corresponding to the query request, wherein the main memory may correspond to the server-side background indexing module, and may specifically include N storage shards, wherein N may take the value of 1, 2, 3 and other positive integers not less than 1 depending on the amount of data, which will not be exhaustive here.

The storage shard is a technical term related to databases. The full amount of data corresponding to a database may be divided into a plurality of storage shards and distributed to a plurality of physical nodes. Each storage shard has a shard identification.

Through the above process, in a case where the cache memory does not store the target group data, the main memory is used as the extraction location, so that the server can quickly respond to the data query request.

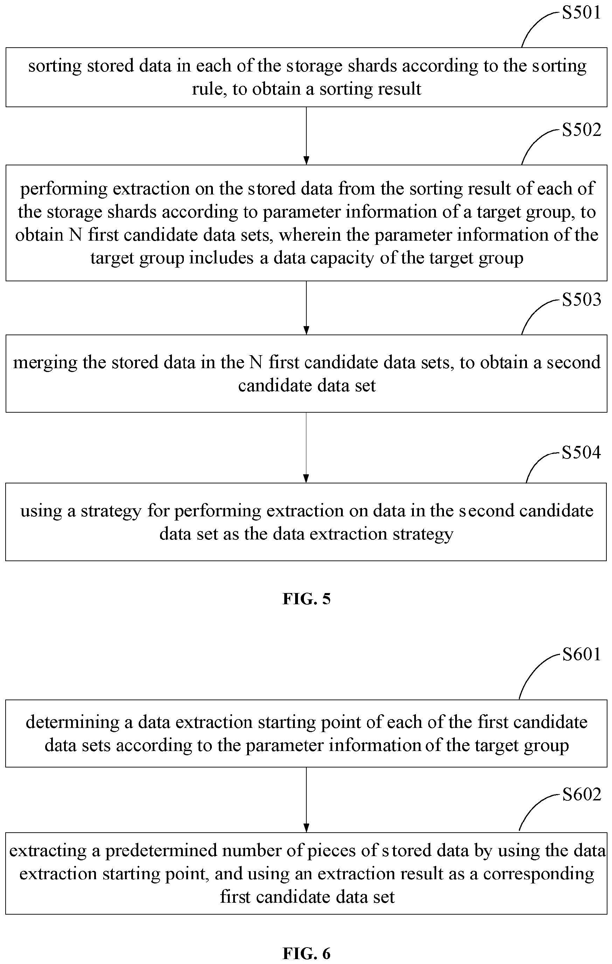

In an implementation, as shown in FIG. 5, in a case where the data query request includes a sorting rule, S102 may further include the following sub-operations:

S501: sorting stored data in each of the storage shards according to the sorting rule, to obtain a sorting result;

S502: performing extraction on the stored data from the sorting result of each of the storage shards according to parameter information of a target group, to obtain N first candidate data sets, wherein the parameter information of the target group includes a data capacity of the target group;

S503: merging the stored data in the N first candidate data sets, to obtain a second candidate data set; and

S504: using a strategy for performing extraction on data in the second candidate data set as the data extraction strategy.

Herein, the sorting rule included in the data query request includes a sorting field and a sorting manner. Specifically, the sorting field may be set as a time field, a price field or the like as required, and the sorting manner may be an ascending order or a descending order, which is not limited here.

For example, during the query process of a user on a certain shopping website, the corresponding data query request may include the keyword "tops," the sorting field "price," and the sorting manner "ascending order." For another example, when a user queries comment information corresponding to a published article, the corresponding data query condition may include the keyword "epidemic," the sorting field "comment time," and the sorting manner "descending," that is, the comment information related to "epidemic" is sorted according to the comment time from new to old. The above-mentioned sorting rule may also be set to other settings as required, which is not limited here.

According to the sorting rule, the stored data in each of storage shards is sorted to obtain a sorting result. The initial state corresponding to the stored data is that a plurality of pieces of stored data determined according to the keyword information in the query request are randomly stored into a plurality of storage shards. The stored data in each of the storage shards is sorted according to the sorting rule, to obtain the sorted storage shards as the sorting result.

For example, in the scenario of querying comment information, when the keyword information in the data query request is "epidemic", assuming that there are 10 million pieces of corresponding full amount of data at this time, the full amount of data may be randomly divided into 20 storage shards, each of the storage shards corresponds to 500,000 pieces of stored data, and then "comment time" and "descending order" are taken as the sorting rule, to sort the 500,000 pieces of stored data in each of the storage shards to get the sorting result.

The number of storage shards and the number of pieces of data stored in each of the storage shards may be set correspondingly as required, which are not limited here.

After the sorting result corresponding to each of the storage shards is obtained, the extraction is performed on the stored data from the sorting result of each of the storage shards according to the parameter information of the target group, to obtain N first candidate data sets correspondingly. The parameter information of the target group includes the data capacity of the target group.

Herein, the parameter information of the target group may include information such as the data capacity (page_group_size) of the target group and the sequence number (page_group index) of the target group, which are not limited here.

For example, when there is corresponding page_group_size=1000 in the data query request, in a certain sorted storage shard, by selecting an extraction starting point, 1000 pieces of stored data are extracted as the first candidate data set corresponding to the storage shard by taking the stored data corresponding to the extraction starting point as the first data content. The same operation is performed on N storage shards, to obtain N first candidate data sets.

Then, the extraction results of the N storage shards are acquired, and the stored data in the N first candidate data sets is merged to obtain a second candidate data set. Finally, based on the target page number information in the data query request, the strategy for performing extraction on data in the second candidate data set is used as the data extraction strategy.

Through the above process, the main memory is divided into a plurality of storage shards, and for each of the storage shards, a part of the full amount of data is only retrieved at most, which may thereby greatly improve query efficiency.

In an implementation, as shown in FIG. 6, S502 may further include:

S601: determining a data extraction starting point of each of the first candidate data sets according to the parameter information of the target group; and

S602: extracting a predetermined number of pieces of stored data by using the data extraction starting point, and using an extraction result as a corresponding first candidate data set.

The data extraction starting point is the location of the first piece of stored data where data extraction is performed on the sorted storage shards. Specifically, the data extraction starting point may be the starting location of the storage shard, or may also be a specified location in the storage shard, which is not limited here.

The predetermined number may be the same as the data capacity (page_group_size) of the target group, which is not limited here.

Through the above process, based on the determination of the extraction starting point and the predetermined number, the first candidate data set in each storage shard may be accurately located, thereby reducing system resource consumption.

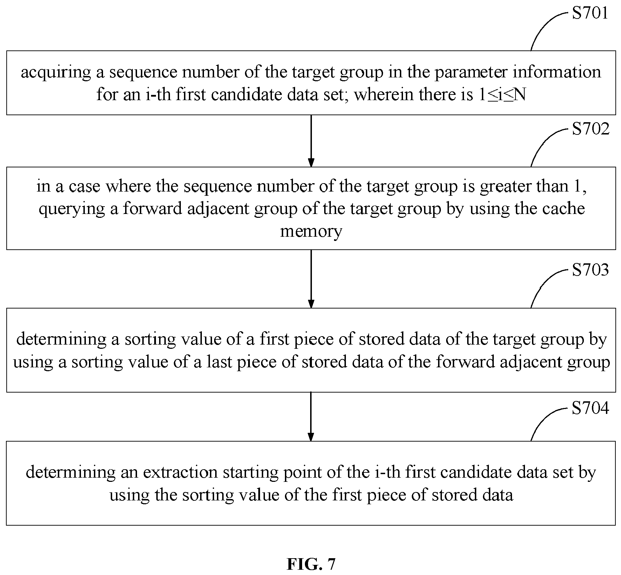

In an implementation, as shown in FIG. 7, S601 may further include the following sub-operations:

S701: acquiring a sequence number of the target group in the parameter information for an i-th first candidate data set; wherein there is $1 \leq i \leq N$;

S702: in a case where the sequence number of the target group is greater than 1, querying a forward adjacent group of the target group by using the cache memory;

S703: determining a sorting value of a first piece of stored data of the target group by using a sorting value of a last piece of stored data of the forward adjacent group; and

S704: determining an extraction starting point of the i-th first candidate data set by using the sorting value of the first piece of stored data.

The extraction starting point of the first candidate data set is determined by acquiring the sequence number of the target group in the parameter information. In a case where the sequence number of the target group is greater than 1, the relevant information of the last piece of stored data of the forward adjacent group of the target group may be acquired through the cache memory, so as to quickly locate the extraction starting point of the first candidate data set.

Specifically, when the target group data cannot be acquired in the cache memory based on the identification (Session ID) corresponding to the data query request, the forward adjacent group (pre_page_group) data of the target group data may continue to be queried in the cache memory. If the query is successful, the cache memory may be used to acquire the last piece of stored data of the forward adjacent group of the target group, so as to determine the extraction starting point of the first candidate data set. Herein, the forward adjacent group is the previous page group of the target group, the sequence number of the forward adjacent group may be calculated by the following calculation formula (3), and the identification of the forward adjacent group may be calculated by the following calculation formula (4):

$$pre\_page\_group\_index = page\_group\_index-1 \quad\text{—— calculation formula}$$

(3); and

$$pre\_Session\ ID = hash\ (query + sorted\_field + page\_size +$$

$$pre\_page\_group\_index + page\_group\_size) \quad\text{—— calculation formula (4)}.$$

In the above calculation formula, pre_page_group index may represent the sequence number of the forward adjacent group, pre_Session ID may represent the identification of the forward adjacent group, and the corresponding meanings of the other parameters may refer to the above calculation formula (1) and calculation formula (2).

The identification of the forward adjacent group may be obtained through the above calculation, and the specific calculation process refers to in the foregoing description, which will not be repeated here. Based on the identification of the forward adjacent group, the corresponding last piece of stored data may be queried in the cache memory and taken out. By using the sorting value of the last piece of stored data, the sorting value of the first piece of stored data of the target group is determined.

Specifically, all data is already sorted according to the sorting rule. For example, in a case where the sorting value of the last piece of stored data of the forward adjacent group is 1000, the extraction starting point of the first candidate data set is determined according to the location corresponding to the sorting value of the first piece of stored data of the target group. That is, correspondingly, the sorting value of the first piece of stored data of the target group is 1001.

In a case where there is no stored data corresponding to the forward adjacent group in the cache memory, the server performs a traversal query from the starting location of the stored data, and the specific process will not be repeated.

Through the above process, the extraction starting point of the first candidate data set may be located based on the relevant data in the cache memory, avoiding starting traversal from the starting location of the stored data for each query, and thereby greatly reducing the resource consumption of the system.

In an implementation, for an i-th first candidate data set, in a case where the sequence number of the target group is equal to 1, the starting location of the i-th storage shard is used as the extraction starting point of the i-th first candidate data set.

At this time, since the sequence number of the target group is 1, there is no need to calculate the extraction starting point of the first candidate data set, and the first piece of stored data in the storage shard is directly used as the extraction starting point of the first candidate data set.

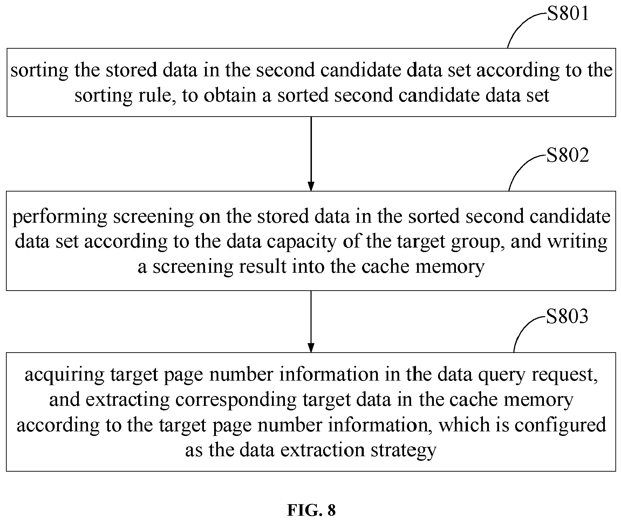

In an implementation, as shown in FIG. 8, S504 may further include the following sub-operations:

S801: sorting the stored data in the second candidate data set according to the sorting rule, to obtain a sorted second candidate data set;

S802: performing screening on the stored data in the sorted second candidate data set according to the data capacity of the target group, and writing a screening result into the cache memory; and

S803: acquiring target page number information in the data query request, and extracting corresponding target data in the cache memory according to the target page number information, which is configured as the data extraction strategy.

For the stored data in the second candidate data set, the aforementioned sorting rule may be used again to perform secondary sorting, to obtain a sorted second candidate data set.

Still using the foregoing example to illustrate, regarding the data capacity (page_group_size) information of the target group corresponding to the data query request, page_group_size=1000 is taken. Then, the first 1000 pieces of stored data are extracted from the sorted second candidate data set, and are written into the cache memory, for quick retrieval and use in subsequent data queries.

When writing the extraction result into the cache memory, a corresponding expiration time may be set. Herein, the expiration time may be set correspondingly as required, for example, 1 hour, 1 day, 1 week, etc., which is not limited here.

Finally, according to the corresponding target page number information in the data query request, the target data corresponding to the target page number is extracted in the cache memory, and this is taken as the extraction strategy. Still using the above example to illustrate, when there are page_size=10 and page_index=27, 10 pieces of data corresponding to the 27th page in the extraction result are used as the target data.

Through the above process, by storing the extraction result that meets the condition into the cache memory, while improving the real-time performance of data query, the occupied system overhead is reduced, so as to meet the needs of highconcurrency real-time query.

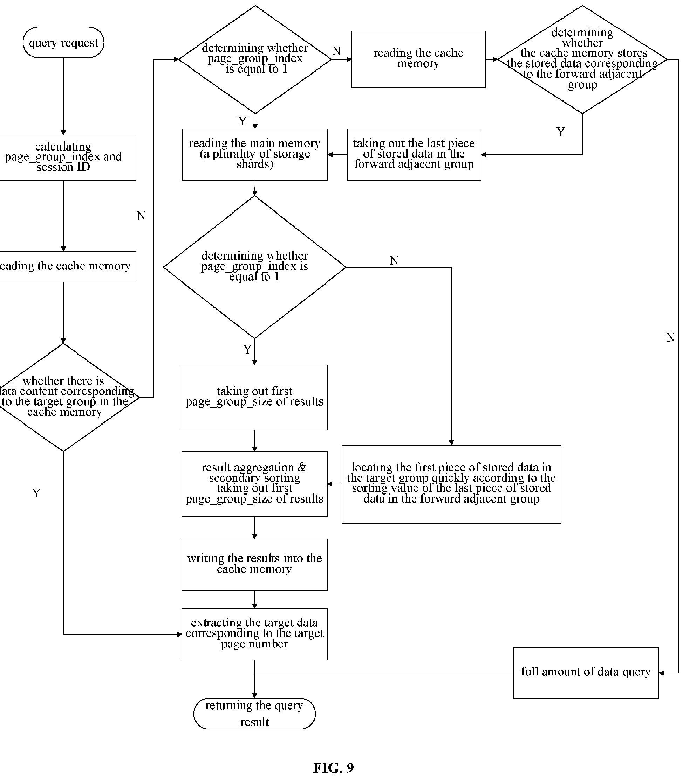

In an implementation, as shown in FIG. 9, a data query method includes the following operations:

(1) A user initiates a data query request based on a client, and the request parameters may include:

query = "epidemic";

sorted-field=time_stamp;

page_index=201;

page_size=10; and

page_group_size=1000.

In the above calculation formulas, query may be a query keyword, time_stamp may be timestamp information corresponding to the stored data, sorted_field may be a sorting field, page index may be target page number information corresponding to target data, page_size may be page size information, and page_group_size may be the data capacity of the target group.

(2) Based on the data query request input by the user, a server calculates the sequence number (page_group_index) of the target group corresponding to the target data and the corresponding identification (Session ID) of the target group.

(3) Based on the Session ID, the cache memory is requested to read the data content corresponding to the target group, if it exists, the query ends; if it does not exist, it is determined whether the sequence number (page_group_index) of the target group is 1. If there is page_group_index =1, the operation (5) is jumped to.

(4) When there is page_group_index>1, the pre_Session ID corresponding to the forward adjacent group is calculated based on the Session ID corresponding to the target group, and at the same time, it is determined based on the pre_Session ID whether the cache memory stores the stored data corresponding to the forward adjacent group. If the stored data corresponding to the forward adjacent group does not exist, the full amount of data query is performed based on the user query request. If the stored data corresponding to the forward adjacent group exists, the last piece of stored data in the forward adjacent group is taken out.

(5) In the case of page_group_index>1, the first piece of stored data in the target group is quickly located according to the sorting value of the last piece of stored data in the forward adjacent group, and is used as the extraction starting point, such that a predetermined number of pieces of stored data are continuously extracted as the first candidate data set and returned to an aggregation module.

In the case of page_group_index=1, the starting location of the target group is used as the extraction starting point, and a predetermined number of pieces of stored data are continuously extracted as the first candidate data set and returned to the aggregation module;

(6) The aggregation module merges the stored data of a plurality of first candidate data sets, and then performs secondary sorting on the same based on a sorting rule. At the same time, a predetermined number of pieces of target group data are extracted and written into the cache memory and an expiration time is set.

(7) Based on the extracted target group data and target page number information, the target data corresponding to the target page number is extracted and returned to the client, and the query ends.

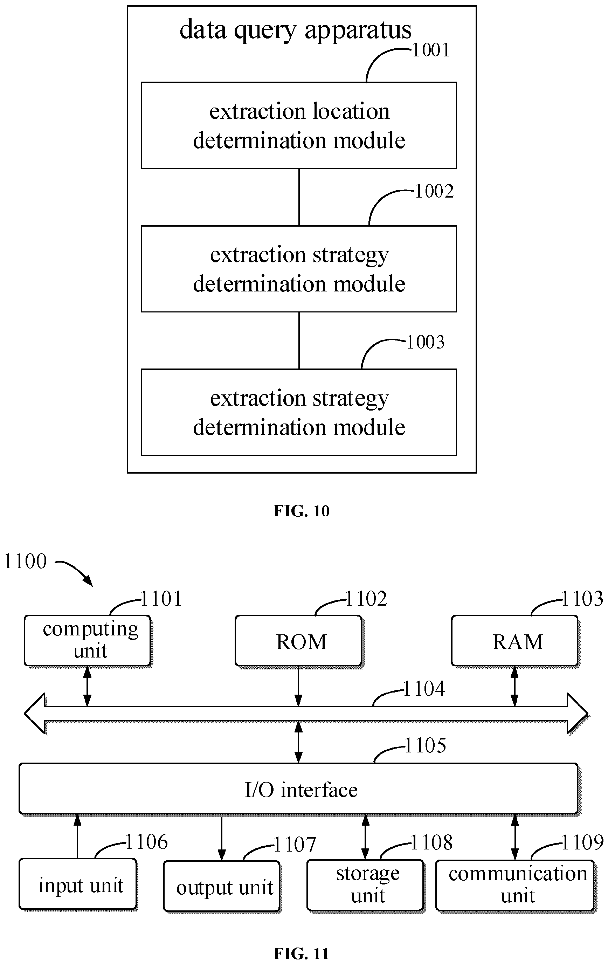

As shown in FIG. 10, the present disclosure relates to a data query apparatus, which may include:

an extraction location determination module 1001, configured for determining an extraction location of target data according to a data query request;

an extraction strategy determination module 1002, configured for determining a data extraction strategy corresponding to the extraction location; and

a result determination module 1003, configured for extracting the target data at the extraction location according to the data extraction strategy, and using the target data as a data query result.

In an implementation, the extraction location determination module 1001 may further include:

an identification determination sub-module, configured for determining an identification corresponding to the data query request;

a search sub-module, configured for searching for target group data in a cache memory based on the identification, wherein the target group data includes the target data; and

an extraction location determination execution sub-module, configured for using the cache memory as the extraction location in a case where the target group data is stored in the cache memory.

In an implementation, the extraction strategy determination module 1002 may further include:

a page number information acquisition sub-module, configured for acquiring target page number information in the data query request; and

a first extraction strategy execution sub-module, configured for using a strategy for extracting the target data from the target group data based on the target page number information, as the data extraction strategy.

In an implementation, the extraction location determination module 1001 may further include:

an identification determination sub-module, configured for determining an identification corresponding to the data query request;

a search sub-module, configured for searching for target group data in a cache memory based on the identification, wherein the target group data includes the target data; and

an extraction location determination execution sub-module, configured for using a main memory as the extraction location in a case where the target group data is not stored in the cache memory, wherein the main memory includes N storage shards, wherein N is an integer not less than 1.

In an implementation, in a case where the data query request includes a sorting rule, the extraction strategy determination module 1002 includes:

a sorting sub-module, configured for sorting stored data in each of the storage shards according to the sorting rule, to obtain a sorting result;

an extraction sub-module, configured for performing extraction on the stored data from the sorting result of each of the storage shards according to parameter information of a target group, to obtain N first candidate data sets, wherein the parameter information of the target group includes a data capacity of the target group;

a merging sub-module, configured for merging the stored data in the N first candidate data sets, to obtain a second candidate data set; and

a second extraction strategy execution sub-module, configured for using a strategy for performing extraction on data in the second candidate data set as the data extraction strategy.

In an implementation, the extraction sub-module includes:

an extraction starting point determination sub-module, configured for determining a data extraction starting point of each of the first candidate data sets according to the parameter information of the target group; and

a first candidate data set determination execution sub-module, configured for extracting a predetermined number of pieces of stored data by using the data extraction starting point, and using an extraction result as a first candidate data set.

In an implementation, the extraction starting point determination sub-module includes:

a sequence number acquisition sub-module, configured for acquiring a sequence number of the target group in the parameter information;

a data acquisition sub-module, configured for: in a case where the sequence number of the target group is greater than 1, acquiring a last piece of stored data of a forward adjacent group of the target group by using the cache memory;

a sorting value determination sub-module, configured for determining a sorting value of a first piece of stored data of the target group by using a sorting value of a last piece of stored data; and

a first extraction starting point determination execution sub-module, configured for determining the extraction starting point of the first candidate data set according to the location corresponding to the sorting value of the first piece of stored data of the target group.

In an implementation, the extraction starting point determination sub-module includes:
a second extraction starting point determination execution sub-module, configured for: in a case where the sequence number of the target group is equal to 1, using the starting location of the storage shard as the extraction starting point of the first candidate data set.

In an implementation, the second extraction strategy execution sub-module includes:

a stored data sorting sub-module, configured for sorting the stored data in the second candidate data set according to the sorting rule, to obtain a sorted second candidate data set;

a stored data extraction sub-module, configured for performing extraction on the stored data in the sorted second candidate data set according to the data capacity of the target group, and writing an extraction result into the cache memory; and

a strategy configuration sub-module, configured for configuring the strategy for the data extraction as extracting corresponding target data in the cache memory according to the target page number information.

In the technical solution of the present disclosure, the acquisition, storage, application, etc., of user's personal information involved are all in compliance with the provisions of relevant laws and regulations, and do not violate public order and good customs.

According to embodiments of the present disclosure, the present disclosure also provides an electronic device, a readable storage medium, and a computer program product.

FIG. 11 shows a schematic block diagram of an example electronic device 1100 that may be configured to implement the embodiments of the present disclosure. The electronic device is intended to represent various forms of digital computers, such as laptop computers, desktop computers, workstations, personal digital assistants, servers, blade servers, mainframe computers, and other suitable computers. The electronic device may also represent various forms of mobile devices, such as a personal digital assistant, a cellular telephone, a smart phone, a wearable device, and other similar computing devices. The components shown herein, their connections and relationships, and their functions are by way of example only and are not intended to limit the implementations of the present disclosure described and/or claimed herein.

As shown in FIG. 11, the electronic device 1100 includes a computing unit 1101 that may perform various suitable actions and processes in accordance with computer programs stored in a read only memory (ROM) 1102 or computer programs loaded from a storage unit 1108 into a random access memory (RAM) 1103. In the RAM 1103, various programs and data required for the operation of the electronic device 1100 may also be stored. The computing unit 1101, the ROM 1102, and the RAM 1103 are connected to each other through a bus 1104. An input/output (I/O) interface 1105 is also connected to the bus 1104.

A plurality of components in the electronic device 1100 are connected to the I/O interface 1105, including: an input unit 1106, such as a keyboard, a mouse, etc.; an output unit 1107, such as various types of displays, speakers, etc.; a storage unit 1108, such as a magnetic disk, an optical disk, etc.; and a communication unit 1109, such as a network card, a modem, a wireless communication transceiver, etc. The communication unit 1109 allows the electronic device 1100 to exchange information/data with other devices over a computer network, such as the Internet, and/or various telecommunications networks.

The computing unit 1101 may be various general purpose and/or special purpose processing assemblies having processing and computing capabilities. Some examples of the computing unit 1101 include, but are not limited to, a central processing unit (CPU), a graphics processing unit (GPU), various specialized artificial intelligence (AI) computing chips, various computing units running machine learning model algorithms, a digital signal processor (DSP), and any suitable processor, controller, microcontroller, etc. The computing unit 1101 performs various methods and processes described above, such as the data query method. For example, in some embodiments, the data query method may be implemented as a computer software program that is physically contained in a machine-readable medium, such as the storage unit 1108. In some embodiments, a part or all of the computer program may be loaded into and/or installed on the electronic device 1100 via the ROM 1102 and/or the communication unit 1109. In a case where the computer program is loaded into the RAM 1103 and executed by the computing unit 1101, one or more of operations of the data query method described above may be performed. Alternatively, in other embodiments, the computing unit 1101 may be configured to perform the data query method in any other suitable manner (e.g., by means of a firmware).

Various implementations of the systems and techniques described herein above may be implemented in a digital electronic circuit system, an integrated circuit system, a field programmable gate array (FPGA), an application specific integrated circuit (ASIC), an application specific standard product (ASSP), a system on a chip (SOC), a load programmable logic device (CPLD), computer hardware, firmware, software, and/or combinations thereof. These various implementations may include an implementation in one or more computer programs, which may be executed and/or interpreted on a programmable system including at least one programmable processor; the programmable processor may be a dedicated or general-purpose programmable processor and capable of receiving and transmitting data and instructions from and to a storage system, at least one input device, and at least one output device.

The program codes for implementing the method of the present disclosure may be written in any combination of one or more programming languages. These program codes may be provided to a processor or controller of a general purpose computer, a special purpose computer, or other programmable data processing apparatus such that the program codes, when executed by the processor or controller, enable the functions/operations specified in the flowchart and/or the block diagram to be implemented. The program codes may be executed entirely on a machine, partly on a machine, partly on a machine as a stand-alone software package and partly on a remote machine, or entirely on a remote machine or server.

In the context of the present disclosure, the machine-readable medium may be a tangible medium that may contain or store programs for using by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination thereof. More specific examples of the machine-readable storage medium may include one or more wire-based electrical connection, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination thereof.

In order to provide an interaction with a user, the system and technology described here may be implemented on a computer having: a display device (e. g., a cathode ray tube (CRT) or a liquid crystal display (LCD) monitor) for displaying information to the user; and a keyboard and a pointing device (e. g., a mouse or a trackball), through which the user may provide an input to the computer. Other kinds of devices may also provide an interaction with the user. For example, a feedback provided to the user may be any form of sensory feedback (e.g., visual feedback, auditory feedback, or tactile feedback); and an input from the user may be received in any form (including an acoustic input, a voice input, or a tactile input).

The systems and techniques described herein may be implemented in a computing system (e.g., as a data server) that includes a background component, or a computing system (e.g., an application server) that includes a middleware component, or a computing system (e.g., a user computer having a graphical user interface or a web browser through which a user may interact with implementations of the systems and techniques described herein) that include a front-end component, or a computing system that includes any combination of such a background component, middleware component, or front-end component. The components of the system may be connected to each other through a digital data communication in any form or medium (e.g., a communication network). Examples of the communication network include a local area network (LAN), a wide area network (WAN), and the Internet.

The computer system may include a client and a server. The client and the server are typically remote from each other and typically interact via the communication network. The relationship of the client and the server is generated by computer programs running on respective computers and having a client-server relationship with each other. The server may be a cloud server, a distributed system server, or a server combined with a blockchain.

It should be understood that the operations may be reordered, added or deleted by using the various flows illustrated above. For example, various operations described in the present disclosure may be performed concurrently, sequentially, or in a different order, so long as the desired results of the technical solutions provided in the present disclosure can be achieved, and there is no limitation herein.

The above-described specific implementations do not limit the protection scope of the present disclosure. It will be apparent to those skilled in the art that various modifications, combinations, sub-combinations, and substitutions may be performed, depending on design requirements and other factors. Any modifications, equivalent substitutions, and improvements within the spirit and principles of the present disclosure are intended to be included within the protection scope of the present disclosure.

**Claims**

1. A data query method, comprising:

   determining (S101) an extraction location of target data according to a data query request;
   determining (S102) a data extraction strategy corresponding to the extraction location; and
   extracting (S103) the target data at the extraction location according to the data extraction strategy, and using the target data as a data query result.

2. The method of claim 1, wherein the determining (S101) the extraction location of the target data according to the data query request, comprises:

> determining (S201) an identification corresponding to the data query request;
> searching (S202) for target group data in a cache memory based on the identification, wherein the target group data comprises the target data; and
> using (S203) the cache memory as the extraction location in a case where the target group data is stored in the cache memory.

3. The method of claim 2, wherein the determining (S102) the data extraction strategy corresponding to the extraction location, comprises:

> acquiring (S301) target page number information in the data query request; and
> using (S302) a strategy for extracting the target data from the target group data based on the target page number information, as the data extraction strategy.

4. The method of any one of claims 1 to 3, wherein the determining (S101) the extraction location of the target data according to the data query request, comprises:

> determining (S401) an identification corresponding to the data query request;
> searching (S402) for target group data in a cache memory based on the identification, wherein the target group data comprises the target data; and
> using (S403) a main memory as the extraction location in a case where the target group data is not stored in the cache memory, wherein the main memory comprises N storage shards, wherein N is an integer not less than 1.

5. The method of claim 4, wherein in a case where the data query request comprises a sorting rule, the determining (S102) the data extraction strategy corresponding to the extraction location, comprises:

> sorting (S501) stored data in each of the storage shards according to the sorting rule, to obtain a sorting result;
> performing (S502) extraction on the stored data from the sorting result of each of the storage shards according to parameter information of a target group, to obtain N first candidate data sets, wherein the parameter information of the target group comprises a data capacity of the target group;
> merging (S503) the stored data in the N first candidate data sets, to obtain a second candidate data set; and
> using (S504) a strategy for performing extraction on data in the second candidate data set as the data extraction strategy.

6. The method of claim 5, wherein the performing (S502) extraction on the stored data from the sorting result of each of the storage shards according to the parameter information of the target group, to obtain the N first candidate data sets, comprises:

> determining (S601) a data extraction starting point of each of the first candidate data sets according to the parameter information of the target group; and
> extracting (S602) a predetermined number of pieces of stored data by using the data extraction starting point, and using an extraction result as a corresponding first candidate data set;
> optionally, wherein the determining (S601) the data extraction starting point of each of the first candidate data sets according to the parameter information of the target group, comprises:

>> acquiring (S701) a sequence number of the target group in the parameter information for an i-th first candidate data set; wherein there is $1 \leq i \leq N$;
>> in a case where the sequence number of the target group is greater than 1, acquiring (S702) and querying a forward adjacent group of the target group by using the cache memory;
>> determining (S703) a sorting value of a first piece of stored data of the target group by using a sorting value of a last piece of stored data of the forward adjacent group; and
>> determining (S704) an extraction starting point of the i-th first candidate data set by using a location corresponding to the sorting value of the first piece of stored data of the target group;

optionally, wherein the determining (S601) the data extraction starting point of each of the first candidate data sets according to the parameter information of the target group, comprises:

for an i-th first candidate data set, in a case where a sequence number of the target group is equal to 1, using a starting location of an i-th storage shard as an extraction starting point of the i-th first candidate data set.

**7.** The method of claim 5 or 6, wherein the strategy for performing the extraction on the data in the second candidate data set, comprises:

sorting (S801) the stored data in the second candidate data set according to the sorting rule, to obtain a sorted second candidate data set; and

performing (S802) extraction and screening on the stored data in the sorted second candidate data set according to the data capacity of the target group, and writing a screening and extraction result into the cache memory;

acquiring (S803) target page number information in the data query request, and extracting corresponding target data in the cache memory according to the target page number information, which is configured as the data extraction strategy.

**8.** A data query apparatus, comprising:

an extraction location determination module (1001), configured for determining an extraction location of target data according to a data query request;

an extraction strategy determination module (1002), configured for determining a data extraction strategy corresponding to the extraction location; and

a result determination module (1003), configured for extracting the target data at the extraction location according to the data extraction strategy, and using the target data as a data query result.

**9.** The apparatus of claim 8, wherein the extraction location determination module (1001) comprises:

an identification determination sub-module, configured for determining an identification corresponding to the data query request;

a search sub-module, configured for searching for target group data in a cache memory based on the identification, wherein the target group data comprises the target data; and

an extraction location determination execution sub-module, configured for using the cache memory as the extraction location in a case where the target group data is stored in the cache memory;

optionally, wherein the extraction strategy determination module (1002) comprises:

a page number information acquisition sub-module, configured for acquiring target page number information in the data query request; and

a first extraction strategy execution sub-module, configured for using a strategy for extracting the target data from the target group data based on the target page number information, as the data extraction strategy.

**10.** The apparatus of claim 8 or 9, wherein the extraction location determination module (1001) comprises:

an identification determination sub-module, configured for determining an identification corresponding to the data query request;

a search sub-module, configured for searching for target group data in a cache memory based on the identification, wherein the target group data comprises the target data; and

an extraction location determination execution sub-module, configured for using a main memory as the extraction location in a case where the target group data is not stored in the cache memory, wherein the main memory comprises N storage shards, wherein N is an integer not less than 1.

**11.** The apparatus of claim 10, wherein in a case where the data query request comprises a sorting rule, the extraction strategy determination module (1002) comprises:

a sorting sub-module, configured for sorting stored data in each of the storage shards according to the sorting rule, to obtain a sorting result;

an extraction sub-module, configured for performing extraction on the stored data from the sorting result of each of the storage shards according to parameter information of a target group, to obtain N first candidate data sets, wherein the parameter information of the target group comprises a data capacity of the target group;

a merging sub-module, configured for merging the stored data in the N first candidate data sets, to obtain a second candidate data set; and

a second extraction strategy execution sub-module, configured for using a strategy for performing extraction on data in the second candidate data set as the data extraction strategy;

optionally, wherein the extraction sub-module comprises:

an extraction starting point determination sub-module, configured for determining a data extraction starting point of each of the first candidate data sets according to the parameter information of the target group; and

a first candidate data set determination execution sub-module, configured for extracting a predetermined number of pieces of stored data by using the data extraction starting point, and using an extraction result as a corresponding first candidate data set;

optionally, wherein the extraction starting point determination sub-module comprises:

a sequence number acquisition sub-module, configured for acquiring a sequence number of the target group in the parameter information for an i-th first candidate data set; wherein there is $1 \leq i \leq N$;

a data acquisition sub-module, configured for in a case where the sequence number of the target group is greater than 1, querying a forward adjacent group of the target group by using the cache memory;

a sorting value determination sub-module, configured for determining a sorting value of a first piece of stored data of the target group by using a sorting value of a last piece of stored data of the forward adjacent group; and

a first extraction starting point determination execution sub-module, configured for determining an extraction starting point of the i-th first candidate data set by using the sorting value of the first piece of stored data;

optionally, wherein the extraction starting point determination sub-module comprises:

a second extraction starting point determination execution sub-module, configured for: for an i-th first candidate data set, in a case where a sequence number of the target group is equal to 1, using a starting location of an i-th storage shard as an extraction starting point of the i-th first candidate data set.

12. The apparatus of claim 11, wherein the second extraction strategy execution sub-module comprises:

a stored data sorting sub-module, configured for sorting the stored data in the second candidate data set according to the sorting rule, to obtain a sorted second candidate data set;

a stored data extraction sub-module, configured for performing screening on the stored data in the sorted second candidate data set according to the data capacity of the target group, and writing a screening result into the cache memory; and

a strategy configuration sub-module, configured for acquiring target page number information in the data query request, and extracting corresponding target data in the cache memory according to the target page number information.

13. An electronic device, comprising:

at least one processor; and

a memory communicatively connected with the at least one processor, wherein

the memory stores instructions executable by the at least one processor, and the instructions, when executed by the at least one processor, enable the at least one processor to perform the method of any one of claims 1 to 7.

14. A non-transitory computer-readable storage medium storing computer instructions, wherein the computer instructions, when executed by a computer, cause the computer to perform the method of any one of claims 1 to 9.

15. A computer program product comprising a computer program, wherein the computer program, when executed by a processor, implements the method of any one of claims 1 to 7.

S101

determining an extraction location of target data according to a data query request

S102

determining a data extraction strategy corresponding to the extraction location

S103

extracting the target data at the extraction location according to the data extraction strategy, and using the target data as a data query result

**FIG. 1**

S201

determining an identification corresponding to the data query request

S202

searching for target group data in a cache memory based on the identification, wherein the target group data includes the target data

S203

using the cache memory as the extraction location in a case where the target group data is stored in the cache memory

**FIG. 2**

acquiring target page number information in the data query request

using a strategy for extracting the target data from the target group data based on the target page number information, as the data extraction strategy

**FIG. 3**

determining an identification corresponding to the data query request

searching for target group data in a cache memory based on the identification, wherein the target group data includes the target data

using a main memory as the extraction location in a case where the target group data is not stored in the cache memory, wherein the main memory includes N storage shards, wherein N is an integer not less than 1

**FIG. 4**

S501

sorting stored data in each of the storage shards according to the sorting rule, to obtain a sorting result

S502

performing extraction on the stored data from the sorting result of each of the storage shards according to parameter information of a target group, to obtain N first candidate data sets, wherein the parameter information of the target group includes a data capacity of the target group

S503

merging the stored data in the N first candidate data sets, to obtain a second candidate data set

S504

using a strategy for performing extraction on data in the second candidate data set as the data extraction strategy

**FIG. 5**

S601

determining a data extraction starting point of each of the first candidate data sets according to the parameter information of the target group

S602

extracting a predetermined number of pieces of stored data by using the data extraction starting point, and using an extraction result as a corresponding first candidate data set

**FIG. 6**

S701

acquiring a sequence number of the target group in the parameter information for an i-th first candidate data set; wherein there is $1 \leq i \leq N$

S702

in a case where the sequence number of the target group is greater than 1, querying a forward adjacent group of the target group by using the cache memory

S703

determining a sorting value of a first piece of stored data of the target group by using a sorting value of a last piece of stored data of the forward adjacent group

S704

determining an extraction starting point of the i-th first candidate data set by using the sorting value of the first piece of stored data

**FIG. 7**

S801

sorting the stored data in the second candidate data set according to the sorting rule, to obtain a sorted second candidate data set

S802

performing screening on the stored data in the sorted second candidate data set according to the data capacity of the target group, and writing a screening result into the cache memory

S803

acquiring target page number information in the data query request, and extracting corresponding target data in the cache memory according to the target page number information, which is configured as the data extraction strategy

**FIG. 8**

query request

calculating
page_group_index and
session ID

N

eading the cache memory

whether there is
data content corresponding
to the target group in the
cache memory

Y

determining whether
page_group_index
is equal to 1

N → reading the cache
memory

determining
whether
the cache memory stores
the stored data corresponding
to the forward adjacent
group

Y

reading the main memory
(a plurality of storage
shards)

taking out the last piece
of stored data in the
forward adjacent group

Y

determining whether
page_group_index is
equal to 1

N

taking out first
page_group_size of results

result aggregation &
secondary sorting
taking out first
page_group_size of results

locating the first piece of stored data in
the target group quickly according to the
sorting value of the last piece of stored
data in the forward adjacent group

writing the results into the
cache memory

extracting the target data
corresponding to the target
page number

full amount of data query

N

returning the query
result

**FIG. 9**

## data query apparatus

~1001

extraction location
determination module

~1002

extraction strategy
determination module

~1003

extraction strategy
determination module

**FIG. 10**

1100

~1101

computing
unit

~1102

ROM

~1103

RAM

~1104

~1105

I/O interface

~1106

input unit

~1107

output unit

~1108

storage
unit

~1109

communication
unit

**FIG. 11**

EP 4 109 293 A1

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 111 858 676 A (GOVERNMENT PROCUREMENT CLOUDING CO LTD) 30 October 2020 (2020-10-30) * paragraph [0012] * * paragraph [0014] - paragraph [0018] * ----- | 1-15 | INV. G06F16/25 |
| A | US 2013/144851 A1 (GUNN KERRY R [AU] ET AL) 6 June 2013 (2013-06-06) * paragraph [0005] - paragraph [0009] * * paragraph [0026] * * paragraph [0039] * ----- | 1-15 | |

TECHNICAL FIELDS
SEARCHED (IPC)

G06F

The present search report has been drawn up for all claims

EPO FORM 1503 03.82 (P04C01)

| Place of search | Date of completion of the search | Examiner |
|---|---|---|
| Berlin | 18 November 2022 | Schmidt, Axel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

**ANNEX TO THE EUROPEAN SEARCH REPORT
ON EUROPEAN PATENT APPLICATION NO.**

EP 22 18 7749

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2022

| Patent document cited in search report | | Publication date | Patent family member(s) | | Publication date |
|---|---|---|---|---|---|
| CN 111858676 | A | 30-10-2020 | NONE | | |
| US 2013144851 | A1 | 06-06-2013 | CN 102968428 | A | 13-03-2013 |
| | | | US 2013031112 | A1 | 31-01-2013 |
| | | | US 2013144851 | A1 | 06-06-2013 |

EPO FORM P0459

For more details about this annex : see Official Journal of the European Patent Office, No. 12/82